# NEW EUROPEAN PATENT SPECIFICATION

(11) **EP 0 953 026 B2**
(45) Date of publication and mention of the opposition decision: **30.05.2018**
(45) Mention of the grant of the patent: 19.03.2003
(21) Application number: 98905961.3
(22) Date of filing: 13.01.1998
(51) Int. Cl.: C09J 175/04, C09J 7/02

(54) **A POLYURETHANE LATEX PRESSURE SENSITIVE ADHESIVE AND PROCESS FOR MAKING SAME**
POLYURETHANLATEX FÜR DRUCKEMPFINDLICHE KLEBSTOFFE UND VERFAHREN ZU SEINER HERSTELLUNG
ADHESIF AUTOCOLLANT EN LATEX DE POLYURETHANNE ET PROCEDE DE FABRICATION ASSOCIE

(30) Priority: 16.01.1997 US 35627 P
(43) Date of publication of application: 03.11.1999
(73) Proprietor: Dow Global Technologies LLC, Midland, MI 48674 (US)
(72) Inventor: SCHROCK, Alan, K., Lake Jackson, TX 77566 (US); WHITE, Douglas, P., Lake Jackson, TX 77566 (US); PARKS, Franklin, E., Jones Creek, TX 77541 (US); TABOR, Ricky, Lynn, Missouri City, TX 77459 (US); WILLKOMM, Wayne, R., Lake Jackson, TX 77566 (US)
(74) Representative: Boult Wade Tennant
(86) International application number: PCT/US1998/000776
(87) International publication number: WO 1998/031760

(56) References cited:
- US-A- 3 515 773
- US-A- 3 796 678
- US-A- 5 102 714

## Description

This invention relates to a pressure sensitive adhesive (hereinafter PSA) composition, and to a process for making same. This invention particularly relates to polyurethane PSA compositions and to substrates coated with polyurethane PSA compositions.

PSAs, sometimes also described as "tacky adhesives", are known compositions, and are described in U. S. Patent No. 3,796,678, for example. For the purposes of the present invention, the term "tacky" is defined to mean "slightly adhesive or gummy to the touch". A PSA or tacky adhesive can be characterized by one or more of the following properties: 1) being an adhesive which, when at the interface of two surfaces, causes the surfaces to remain joined together; 2) having limited adhesive strength, such that most materials adhering to a substrate coated with a PSA can be separated from the substrate without tearing or deforming the material or the coated substrate; 3) retaining adhesive properties after repeated uses; and 4) being non-transferable, that is, having a tendency to remain upon the substrate to which it was applied even after several cycles of attachment and removal of the coated substrate to and from a surface.

Such adhesives are known to be useful in many applications, such as the familiar yellow note pads marketed in The United States of America under the Trademark "Post-it" by 3M. Therein, a note page from the pad can be affixed and then easily removed from a surface by means of the PSA strip on the back of the note page.

However, not all PSAs are equivalent. There can be problems with using PSAs, depending on the properties of the PSA and the application in which it finds use. The PSA can, with time, lose its ability to adhere to a surface. For example, the adhesive surface of a PSA coated substrate can accumulate dirt and dust and lose the ability to adhere to the surface to which the coated substrate was intended to be attached. Some PSAs which are tacky due to an excess of a reactive component in the PSA composition can, with time, react with water, air or other materials in the environment and lose their tackiness.

In an inexpensive application, such as the Post-it™ note described above, the loss of tackiness can be an inconvenience. For example, a Post-it™ note that has been attached to a document can lose its ability to adhere to the document, become separated from the document, and possibly be lost. In other applications, such a loss of tackiness could be very expensive or even dangerous. For example, U.S. Patent No. 5,102,714 to Mobley, et al., and U.S. Patent No. 5,045,375 to Davis, et al., both disclose using a tacky adhesive on the under-side of a carpet. In such an application, the loss of adhesive properties by the PSA could require that the carpet be discarded or reinstalled. It could also be dangerous if someone were to fall after stepping upon or tripping over a loose carpet.

Therefore, it would be desirable in the art of preparing PSA coated articles of manufacture to prepare a PSA coated substrate from a PSA composition that could be washed free of contamination, in order to have the tackiness of the PSA restored. It would also be desirable in the art if the PSA composition used would retain its tackiness under the conditions of the article's use. It would be even more desirable if such a PSA coated substrate could be prepared using a PSA which could be sprayed or painted upon the substrate.

In one aspect, the present invention is a polyurethane latex composition, said composition comprising a polyurethane aqueous dispersion prepared from a formulation which include a stoichiometric excess of polyols such that the polymer terminates in unreacted polyol chains which are not connected to other polymer molecules and which dispersion contains less than 20 percent pendant chains by weight based on total weight of solids, said polyurethane aqueous dispersion being free of volatile solvent and being suitable for being dried to form a pressure-sensitive-adhesive composition.

In a preferred embodiment, the present invention is a polyurethane latex composition, wherein said polyurethane aqueous dispersion is suitable for being dried to form a pressure-sensitive-adhesive composition with an original adhesive strength, said pressure-sensitive-adhesive composition having an adhesive strength of at least 60 percent of said original adhesive strength when said pressure-sensitive-adhesive composition is washed and dried.

In a preferred embodiment, the present invention is a polyurethane latex composition, wherein said polyurethane aqueous dispersion is free of an added tackifier.

In another aspect, the present invention is a pressure-sensitive-adhesive composition, said composition comprising less than 20 percent preferably from 0 percent to 19.5 percent, more preferably from 0 percent to 17 percent, most preferably from 0 percent to 15 percent by weight pendant chains based on total weight of solids, said pressure-sensitive-adhesive composition being obtainable by drying a polyurethane aqueous dispersion as defined in the appended claims.

A further preferred emdodiment is a polyurethane PSA composition comprising a polyurethane PSA having less than 20 percent pendant chains, wherein the PSA can recover at least 60 percent of its original adhesion after it is washed and dried.

A further preferred embodiment is a pressure-sensitive-adhesive composition; wherein said composition has a T_{g} below the temperature at which said composition is used, preferably below 25°C, more preferably below 5°C.

A further preferred embodiment is a pressure-sensitive composition, wherein said composition is substantially linear.

In a preferred embodiment, the present invention is a pressure-sensitive composition, wherein said composition has an original adhesive strength, said composition having an adhesive strength of at least 60 percent of said original adhesive strength when said composition is washed and dried.

In a preferred embodiment, the present invention is a pressure-sensitive composition, wherein said composition is obtainable by drying a polyurethane aqueous dispersion that is substantially fully reacted in the latex state and is further free of an added tackifier.

The polyurethane PSA composition can be prepared by a process comprising the steps:
(a) emulsifying a polyurethane prepolymer in water;
(b) chemically reacting the prepolymer to react substantially all unreacted functional groups; and
(c) dehydrating the aqueous dispersion
wherein the polyurethane PSA can recover at least 60 percent of its original adhesion after it is washed and dried, and wherein the PSA is obtained from a PSA-forming latex composition.

The polyurethane PSA composition can be prepared by a process comprising the steps:
(a) emulsifying a polyurethane prepolymer in water;
(b) chemically reacting the prepolymer to react substantially all unreacted functional groups; and
(c) dehydrating the aqueous dispersion
wherein the polyurethane PSA has a peel strength build of less than 400 percent, and wherein the PSA is obtained from a PSA-forming latex composition.

In another aspect the present invention is a substrate having a pressure-sensitive adhesive coating affixed to at least a portion of said substrate, said pressure-sensitive-adhesive coating comprising a pressure-sensitive-adhesive composition that contains less than 20 percent by weight pendant chains based on total weight of solids, said pressure-sensitive-adhesive composition being obtainable by drying a polyurethane aqueous dispersion as defined by the appended claims.

In a preferred embodiment, the present invention is a PSA-coated substrate, wherein said pressure-sensitive-adhesive composition has an original adhesive strength and said pressure-sensitive-adhesive composition has an adhesive strength of at least 60 percent of said original adhesive strength when said pressure-sensitive-adhesive composition is washed and dried.

In a preferred embodiment, the present invention is a PSA-coated substrate, wherein said pressure-sensitive-adhesive composition is obtainable by drying a polyurethane aqueous dispersion that is further free of an added tackifier.

In a preferred embodiment, the present invention is a PSA-coated substrate, wherein said substrate is a white board or a walk-off carpet mat.

In a preferred embodiment, the present invention is a PSA-coated substrate, wherein said pressure-sensitive-adhesive coating has a peel strength build of preferably less than 400%, more preferably less than 300%, even more preferably less than 200% and most preferably less than 100%.

In a preferred embodiment, the present invention is a polyurethane PSA-coated substrate wherein the substrate is coated with a polyurethane PSA on at least one portion of at least one surface of the substrate, and wherein the PSA can recover at least 60 percent of its original adhesion after it is washed and dried.

The polyurethane PSA-coated substrate can be prepared by comprising applying a polyurethane latex PSA coat to at least one portion of at least one surface of the substrate, wherein the polyurethane PSA can recover at least 60 percent of its original adhesion after it is washed and dried.

In a preferred embodiment, the present invention is a polyurethane PSA-coated substrate, wherein at least one portion of at least one surface of the substrate is coated with a polyurethane PSA, and wherein the PSA has a peel strength build of less than 400 percent.

In another aspect, the present invention is a process for preparing a substrate having a pressure-sensitive-adhesive coating affixed to at least a portion of said substrate, said process comprising:
A. applying a polyurethane aqueous dispersion as defined in the appended claims to at least a portion of a substrate and said polyurethane aqueous dispersion being obtainable by:
   1) emulsifying a polyurethane prepolymer in water, said polyurethane prepolymer having at least one unreacted functional group; and
   2) chemically reacting substantially any unreacted functional group; and
B. dehydrating said polyurethane aqueous dispersion and obtaining a pressure-sensitive-adhesive composition.

Included in the present invention is a process for preparing a polyurethane PSA-coated substrate comprising applying a polyurethane latex PSA coat to at least one portion of at least one surface of the substrate, wherein the polyurethane PSA has a peel strength build of less than 400 percent.

In one embodiment, the present invention is a polyurethane latex PSA composition as defined in the appended claims used to prepare a polyurethane PSA. For the purposes of the present invention, a polyurethane latex PSA is a stable polyurethane aqueous dispersion which can be dried to form a polyurethane polymer having PSA properties. The polyurethane latex can be prepared by any means known to those skilled in the art of preparing polyurethane latexes. For example, a polyurethane latex useful in the practice of the present invention can be prepared by conventional processes such as: 1) dissolving a polyurethane in a volatile solvent, 2) emulsifying the solution with water, and 3) removing the solvent. Such processes are disclosed in U.S. Patent Nos. 3,360,599; 3,503,917; 4,123,403; and 5,037,864 which are incorporated herein by reference. However, it is preferable that polyurethane latexes of the present invention do not include volatile solvents.

Polyurethane-forming mixtures useful in the practice of the present invention can include active hydrogen compounds, polyisocyanates, and optional components such as chain extenders; surfactants; fillers; dispersants; foam stabilizers; plasticizers; tackifiers; thickeners; and fire retardants, for example. A polyurethane-forming mixture can also include polyurethane prepolymers. A suitable prepolymer can have a molecular weight in the range of from 100 to 10,000. Prepolymers useful in the practice of the present invention are substantially liquid under the conditions of dispersal in water. Alternatively, useful prepolymers can be liquified at elevated temperatures.

Polyurethane polymers and polyurethane prepolymers used herein are prepared from polyisocyanates and active hydrogen compounds. The polyisocyanates can be aliphatic or aromatic. Aromatic polyisocyanates suitable for use herein include: phenyl diisocyanate; 2,4-toluene diisocyanate; 2,6-toluene diisocyanate; ditoluene diisocyanate; naphthalene 1,4-diisocyanate; 2,4'- or a combination thereof 4,4'-diphenylmethane diisocyanate (MDI); polymethylene polyphenylenepolyisocyanates (polymeric MDI); like compounds, and mixtures thereof. Suitable aliphatic polyisocyanates include: 1,6-hexamethylene diisocyanate; isophorone diisocyanate; 1,4-cyclohexyl diisocyanate. Suitable aliphaatic polyisocyanates also include the hydrogenated derivatives of suitable aromatic polyisocyanates such as 4,4'-dicyclohexylmethane diisocyanate; 2,4'-dicyclohexylmethane diisocyanate; 2,2'-dicyclohexylmethane diisocyanate; like compounds and mixtures thereof.

Active hydrogen compounds are compounds that can react with Zerewitinov reagent and can be described generally as compounds having functional groups that contain at least one hydrogen atom bonded directly to an electronegative atom such as, for example, nitrogen, oxygen or sulfur. Suitable active hydrogen compounds can be polyols of molecular weight of less than 6000.

The present invention optionally includes a chain extender. A chain extender is used herein to build the molecular weight of the polyurethane prepolymer by reaction of the chain extender with the isocyanate functionality in the polyurethane prepolymer, that is, chain extend the polyurethane prepolymer. A suitable chain extender is typically a low equivalent weight active hydrogen containing compound having 2 or more active hydrogen groups per molecule. The active hydrogen groups can be hydroxyl, mercaptyl, or amino groups. An amine chain extender can be blocked, encapsulated, or otherwise rendered less reactive. Suitable chain extenders include, for example, glycols and glycol ethers such as: ethylene glycol; 1,4-butane diol; 1,6-hexamethylene glycol; dipropylene glycol; tripropylene glycol; diethylene glycol; triethylene glycol; cyclohexanedimethanol; the diverse bisphenols; like compounds and mixtures thereof. Preferred chain extenders include, for example, water, amine terminated polyethers, amino ethyl piperazine, dithiomethyl toluene diamine, diethyl toluene diamine, 2-methyl piperazine, isophorone diamine, ethylene diamine, diethylene triamine, lysine in any of its stereoisomeric forms or a combination thereof salts, ethanol amine, diethanol amine, hexane diamine, hydrazine and piperazine. Chain extension can be carried out after the prepolymer is dispersed in water to obtain an aqueous dispersion of the prepolymer.

A polyurethane PSA of the present invention can include less than 20 percent by weight of pendant chain groups that are covalently bonded to the polyurethane PSA compound. A polyurethane PSA of the present invention can have any effective amount of pendant chains bonded to the PSA. In the present invention, by an "effective amount" it is meant any percentage of pendant chains present in the PSA that will enable the PSA to have a T_{g} of less than 25°C.

A polyurethane PSA of the present invention includes less than 20 percent pendant chains in the aqueous dispersion, by weight based on the weight of the solids. The weight of solids, as used herein, excludes water from the calculation. Preferably, a PSA composition of the present invention includes from 0.0 percent to 19.5 percent, by weight, pendant chains. More preferably, a PSA of the present invention includes from 0 percent to 17 percent, by weight, pendant chains. Most preferably, a PSA of the present invention includes from 0 percent to 15 percent, by weight, pendant, chains. In the practice of the present invention, by "pendant chains" it is meant substituents that are not incorporated into the continuous head-to-tail arrangement of atoms in a polyurethane polymer, that is, substituents that are branched from the polymer.

Pendant chains in the present invention can include reactive functional groups such as isocyanate groups, active hydrogen containing groups, unsaturatation, or other functionality that can be chemically reacted. The pendant chains can have various molecular weights and compositions. Pendant chains having reactive functional groups can be chemically reacted to give a chemically modified pendant chain on the polyurethane PSA. Alternatively, the pendant chains can be non-reactive.

A PSA of the present invention can include low molecular weight oligomers that can be chain extended. Chain extension of a low molecular weight oligomer can be carried out either by reacting an oligomer having active hydrogen functionality with a polyisocyanate compound, as described herein, or by reacting an oligomer having isocyanate functionality with an active hydrogen containing compound.

Compounds useful for preparing suitable pendant chain compounds have a molecular weight of between 400 and 6000 atomic mass units, and additionally have a glass transition temperature (T*_{g}*) which is below the temperature at which the PSA is to be utilized. Suitable compounds preferably have a T*_{g}* of below 25°C; more preferably the T*_{g}* is below 10°C, most preferably below 5°C. Compounds useful in the practice of the present invention for preparing suitable pendant chain compounds can include polyalkylene oxides, but other compounds can also be utilized.

Alternatively, prepolymers having pendant groups which can become pendant chains in the dehydrated polyurethane PSA polymer can be used to prepare polyurethane PSAs of the present invention. Suitable pendant chain compounds can be formed by the reaction of mono functional active hydrogen compounds with isocyanate terminated prepolymers or emulsified isocyanate prepolymers. For example, a low molecular weight mono-functional active hydrogen compound can be reacted with a polyfunctional isocyanate terminated prepolymer to form a prepolymer suitable for use in the practice of the present invention. Low molecular weight mono-functional active hydrogen compounds, as the term is used herein, have a molecular weight of less than 600 atomic mass units. Suitable low molecular weight mono-functional active hydrogen compounds include: butanol, methanol, isopropanol, N,N-dimethyl ethanol amine, aniline, N-methyl piperazine, ammonia, alkoxylates of nonyl phenol.

Suitable prepolymers can also be formed by the reaction of mon-functional active hydrogen oligomers with emulsified isocyanate terminated prepolymers. For example, a mono-functional active hydrogen oligomer can be reacted with a poly-functional isocyanate terminated prepolymer to prepare a prepolymer having oligomeric pendant groups which can become pendant chains in the dehydrated polyurethane PSA polymer. In one embodiment, a mono-functional active hydrogen oligomer can be included with the reactants during the synthesis of the prepolymer such that the pendant chain-forming group is incorporated as the prepolymer is formed, or alternately, the oligomer can be reacted with the prepolymer after the prepolymer has been prepared to obtain the pendant chain forming group. Suitable mono-functional active hydrogen oligomers include: monols derived from polyalkylene oxides, mono-amine terminated polyalkylene oxides, alkoxylated nonyl phenol.

A polyurethane PSA composition of the present invention can be prepared in one of several ways herein described. In one embodiment, the polyurethane latex forming reaction can be carried out using an excess of polyol functionality. In this embodiment, the polyisocyanate and active hydrogen compound are combined in a polyurethane-forming mixture at an isocyanate index of from 10 to 100. The prepolymer formed can be chain-extended using a polyisocyanate. In the present invention, the isocyanate index is calculated without accounting for the reactivity of water with a polyisocyanate.

In another embodiment, a polyurethane PSA composition can be prepared by combining a blend of monols and polyols with a polyurethane forming material such that the prepolymer obtained is hydroxyl-terminated. In this embodiment, the polyurethane-forming mixture and the monol/polyol blend are combined at an isocyanate index of from 10 to 100. Preferably the isocyanate index is within the range of from 20 to 100. More preferably the isocyanate index is within the range of from 30 to 100. Most preferably, the isocyanate index is within the range of from 40 to 100. The hydroxyl-terminated prepolymer formed in this step can be chain-extended by reaction of the prepolymer with a polyisocyanate.

In still another embodiment, a polyurethane PSA composition can be prepared by combining a blend of monols and polyols with a polyisocyanate to form a polyurethane prepolymer such that the prepolymer is isocyanate-terminated. In this embodiment, the monol/polyol blend and polyisocyanate are combined at an isocyanate index of from 100 to 500. Preferably the isocyanate index is within the range of from 100 to 450. More preferably the isocyanate index is within the range of from 100 to 400. Most preferably, the isocyanate index is within the range of from 100 to 350.

In yet another embodiment, a polyol having an equivalent weight of greater than 1500 can be reacted with a polyisocyanate at an isocyanate index of from 10 to 500. Preferably the isocyanate index is within the range of from 20 to 450. More preferably the isocyanate index is within the range of from 30 to 400. Most preferably, the isocyanate index is within the range of from 40 to 350.

In another embodiment, polyols having non-reactive long chains can be reacted with a polyisocyanate at an index of from 10 to 500 to form a polyurethane PSA composition having long, non-reactive chain ends. By "long chains" it is meant straight or branched hydrocarbon chains having from 8 to 300 carbons in the chain. Preferably the carbon chain length is from 10 to 275, more preferably from 12 to 250, and most preferably from 16 to 200. Preferably, the isocyanate index is from 20 to 450. More preferably, the isocyanate index is from 30 to 400; most preferably from 40 to 350.

In another embodiment, the polyurethane PSA is substantially linear. This can be achieved by using little or no monomer having a functionality greater than two. Monomers having functionality greater than two provide crosslinking or branch points, which can be undesireable when preparing substantially linear PSA's. A polyurethane PSA is defined as substantially linear if less than 10 mole percent of the monomers have a functionality greater than two.

In another embodiment, triols or higher functionality polyols are partially end capped so that some of the chains are unreactive. The capping is done such that most of the triol remains at least two functional. Capping can be accomplished using conditions suitable for reacting a polyol with an alcohol-reactive compound such as for example, maleic anhydride to form an ester, or phenyl isocyanate to form a urethane.

The polyurethane latex PSAs of the present invention are characterized by several properties. The polyurethane latex PSAs of the present invention are substantially fully reacted while in the latex state. Resultant tackiness is due to the physical properties of the polyurethane polymer and not due to excess of reactants which could react with ambient moisture. Neither is the tackiness of the polyurethane latex PSA due to a plasticizer or a volatile tackifier.

Another property of the polyurethane latex PSAs of the present invention is that they can be washed clean of particulate contamination. The polyurethane polymers useful with the present invention are stable in the presence of water and conventional detergents. This can be a substantial advantage over some conventional PSAs which can either lose tackiness or physical integrity when washed with water and detergents. Polyurethane PSAs of the present invention can recover at least 60 percent of their original adhesive strength after being washed and dried.

Yet another property of the polyurethane latex PSAs of the present invention is that the latex can be applied by means of painting or spraying. For purposes of the present invention, painting is defined as applying a material, such as a PSA, to a brush or other applicator, and then depositing the polyurethane latex on a substrate, or, in the alternative, the material can be puddled or pooled on a substrate and then spread over the substrate using a brush or other spreading means. For the purposes of the present invention, spraying is defined as applying a material, such as a polyurethane latex, by atomizing the material and ejecting the atomized material onto the substrate.

Another process for applying a polyurethane latex PSA to a substrate is dipping. In a dipping process, a substrate is lowered into a pool of polyurethane latex and then removed. The latex which is retained on the substrate can be allowed to dry as is or can be further spread to make a more even application. Parts of the substrate can be masked to avoid getting polyurethane latex PSA on the entire surface of the dipped substrate.

The polyurethane latex PSAs of the present invention can be applied to a substrate by means of a transfer process. In a transfer process, a polyurethane latex PSA is applied to a material which has very little ability to adhere to the PSA. This "transfer" material is brought into contact with another substrate which has a higher adhesive affinity for the PSA. The transfer material is removed and the PSA is retained on the substrate. For example, a tape material which has adhesive on both sides could be prepared in this way wherein a ribbon substrate is contacted on both sides with a transfer sheet bearing a PSA useful with the present invention. While the above processes for applying a latex to a substrate are preferred, any process known to be useful to one of ordinary skill in the art for applying a polyurethane latex to a substrate can be used with the present invention.

A polyurethane latex can be coalesced to form a PSA polymer by allowing a layer of polyurethane latex PSA to dry. The resultant PSA is tacky. Tackiness in a polyurethane polymer can be introduced by any means known to be useful to one skilled in the art of preparing polyurethanes. Tackiness can be introduced by means of using a polyurethane formulation which includes high molecular weight monols. According to the present invention, tackiness is introduced into a polyurethane polymer by preparing the polyurethane with a formulation including a substantial amount of high molecular weight diols. According to the present invention, tackiness can be introduced into a polyurethane by preparing the polyurethane with a formulation which includes an stochiometric excess of polyols such that the polymer terminates in unreacted polyol chains which are not connected to other polymer molecules. No matter how the tackiness is introduced, the tacky adhesive resulting from drying a polyurethane latex of the present invention will have the properties described above: it retains its tackiness, it can be washed clean of particulate contamination, and can be applied by spraying, painting, dipping or transferring.

Polyurethane latex PSA coated substrates are prepared by applying a polyurethane latex of the present invention to a substrate. Using a polyurethane latex of the present invention to prepare coated substrates can be advantageous when compared to both reactive A + B type polyurethanes and conventional latexes. Conventional polyurethane systems are prepared by reacting at least two component streams: an "A" component which includes a polyisocyanate, polyisocyanate derivative or a polyisocyanate prepolymer and a "B" component which includes at least one isocyanate reactive compound, typically a polyol.

In a marked contrast to using an A + B system, in an application of the present invention, the polymer is already fully formed in the latex. The polyurethane latex can be applied to a substrate and dried as quickly or as slowly as is desirable in the application and under conditions limited only by the tolerances of the polymer and substrate. Since the polymer is fully formed, there is very little likelihood of a worker coming into contact with any reactive raw
material.

Another advantage of the present invention over an A + B system is the viscosity of a latex of the present invention system is very easily adjusted. The common means of adjusting the viscosity of liquid systems, either varying the temperature or the solvent concentration of a system, is largely not available with an A + B polyurethane system. Since the system has a reactivity profile, increasing the temperature could cause the polymer to form prematurely, for example, inside a mixing head. Likewise, adding a solvent to polyurethane formulation will likely cause a change to the physical properties of any polymer prepared therewith. With a polyurethane latex of the present invention, temperatures can be varied to vary the latex's viscosity, as can the solids concentration. Special additives such as thixotropes also can be added.

An additional advantage of a polyurethane latex is that the thickness of an application layer can be easily adjusted. Multiple coats can be used or the latex can be made either more or less viscous during the application which in turn can make a layer being applied either more or less thick. In applications of the present invention, a polyurethane latex PSA is applied to a substrate which is in turn dried to result in a thickness of from 1 micron to 500 microns, preferably from 5 microns to 400 microns, and even more preferably from 15 microns to 300 microns.

The polyurethane latex PSAs of the present invention are also advantageous when compared to conventional PSAs. The PSAs of the present invention are inherently tacky. Formulations used to prepare the polyurethane latexes need no added tackifiers. Additionally, the PSAs of the present invention are washable while conventional PSAs are not generally washable. Some conventional PSAs have a tendency, with the passage of time, to be more prone transfer from the substrate to which they are originally applied to a material which has been applied to the PSA. The polyurethane latex PSAs of the present invention generally do not have this property.

After being applied, a polyurethane latex of the present invention is cured to produce a PSA. Any means of drying the polyurethane latex can be used which is known to be useful to those of ordinary skill in the art. For example, the polyurethane latex coating can be air dried at ambient conditions or it can be dried at elevated temperatures, optionally in reduced humidity or with forced air. The two considerations of choosing drying conditions for the present invention are 1) not to exceed the temperature tolerance of the polyurethane polymer or the support and 2) not to remove water from the latex so quickly that the film is interrupted due to bubbling unless a bubbled finished is desired. Any drying conditions, optionally with additional drying aids, such as forced air, which is known to be useful to those of ordinary skill in the art of coating substrates with polyurethane latexes can be used with the present invention.

Any substrate which can be coated either completely or partially with a PSA can be used with the present invention. For example, useful substrates can be any articles composed of at least one material selected from the group consisting of: glass, fabric, wood, metal, or plastic. The substrate can be a composite mixture of materials. It is not critical to the practice of the present invention what the substrate is composed of. It is only critical in the practice of the present invention that the surface of the substrate can be coated with a PSA of the present invention. None-the-less, there are some preferred substrates. One preferred substrate is a specially prepared combination white-bcard and bulletin board. One embodiment of such a board consists of a standard white board suitable to be written upon with erasable markers and adjacent thereto a rectangular surface coated with a polyurethane latex PSA. Such a surface could replace a more conventional board which could be prepared with cork in place of the PSA coated surface. The surface of the combination board of the present invention could hold papers without having to pierce the papers with a tack. Similarly, the surface of a board of the present invention would not wear out with repeated use as would a media such as cork.

Another substrate useful with the present invention is a "walk off" carpet mat. Such mats are commonly used in buildings to protect flooring from unusual foot or equipment traffic. For example, in a house being shown during a real-estate show, a walk off mat of the present invention could be rolled out onto carpet and wood floors to protect that flooring during the show, then pulled up and washed and reused or discarded.

Another useful substrate would be a frame to surround a CRT (cathode ray tub) computer monitor. Notes could be attached to the monitor so that they would be immediately visible to the computer operator. Since the frame would be adhesive, ordinary paper rather than Post-it™ notes could be used. Other useful substrates include display boards, wall paper, fabrics, and reusable signs. Substrates which have been coated on two sides could be used in place of metal fasteners. Double sided tape could be prepared by means of the present invention.

Substrates coated with polyurethane PSA materials of the present invention can exhibit low peel strength build properties. Peel strength is the measure of the force required to remove an adhesive-backed article from the surface of a second object to which the adhesive article has been attached. Peel strength build is the measure of the increase in peel strength of an adhesive-backed article over time. Low peel strength build can be desirable in applications wherein the adhesive-backed article will be removed from the second object after some time. For example, low peel strength build is a desirable property in sticky note pad applications. PSA-coated articles of the present invention can exhibit peel strength build of less than 750 percent. Preferably, peel strength build is less than 400 percent. More preferably, peel strength build is less than 400 percent. More preferably, peel strength build is less than 300 percent. Even more preferably, peel strength build is less than 200 percent, and most preferably less than 100 percent.

The polyurethane latexes of the present invention are prepared using polyurethane formulations which include a polyisocyanate component and a isocyanate reactive component also known as an active hydrogen containing material. The term "polyurethane" is not limited to those polymers which include only polyurethane linkages. It is well understood by those of ordinary skill in the art of preparing polyurethanes that polyurethanes also includes polymers containing allophanate, biuret, carbodiimide, oxazolinyl, isocyanurate, uretidinedione, urea, and other linkages in addition to urethane.

When admixed with water to form a latex, a polyurethane formulation useful with the present invention can be an isocyanate terminated prepolymer, an active hydrogen terminated prepolymer, or an admixture of a polyisocyanate and a polyisocyanate reactive component at substantially stochiometric concentrations. The formulation may or may not react with water in forming a latex. The formulations of the present invention are preferably thermosets, but can also be thermoplastics.

Also advantageously used for the polyisocyanate component of the formulations of the present invention are the so-called modified multifunctional isocyanates, that is, products which are obtained through chemical reactions of the above diisocyanates or a combination thereof polyisocyanates. Exemplary are polyisocyanates containing esters, ureas, biurets, allophanates and preferably carbodiimides or a combination thereof uretonimines; isocyanurate or a combination thereof urethane group containing diisocyanates or polyisocyanates. Liquid polyisocyanates containing carbodiimide groups, uretonimine groups or a combination thereof isocyanurate rings, having isocyanate groups (NCO) contents (42/polyisocyanate mwt.) of from 10 to 40 weight percent, more preferably from 20 to 35 weight percent, can also be used. These include, for example, polyisocyanates based on 4,4'-, 2,4'- or a combination thereof 2,2'-diphenylmethane diisocyanate and the corresponding isomeric mixtures, 2,4- or a combination thereof 2,6-toluenediisocyanate and the corresponding isomeric mixtures; mixtures of diphenylmethane diisocyanates and PMDI and mixtures of toluenediisocyanates and PMDI or a combination thereof diphenylmethane diisocyanates.

Suitable prepolymers also useful with the present invention are prepolymers having NCO contents of from 2 to 40 weight percent, more preferably from 4 to 30 weight percent. These prepolymers are prepared by reaction of the di- or a combination thereof polyisocyanates with materials including lower molecular weight diols, triols, but also they can be prepared with multivalent active hydrogen compounds such as di- and tri-amines and di- and tri-thiols. Individual examples are aromatic polyisocyanates containing urethane groups, preferably having NCO contents of from 5 to 40 weight percent, more preferably 20 to 35 weight percent, obtained by reaction of diisocyanates or a combination thereof polyisocyanates with, for example, lower molecular weight diols, triols, oxyalkylene glycols, dioxyalkylene glycols or polyoxyalkylene glycols having molecular weights up to 800. These polyols can be employed individually or in mixtures as di- or a combination thereof polyoxyalkylene glycols. For example, diethylene glycols, dipropylene glycols, polyoxyethylene glycols, polyoxypropylene glycols and polyoxypropylenepolyoxyethylene glycols can be used. Polyester polyols can also be used as well as alkyl diols such as butane diol.

Particularly useful in the present invention are: (i) polyisocyanates having an NCO content of from 8 to 40 weight percent containing carbodiimide groups or a combination thereof urethane groups, from 4,4'-diphenylmethane diisocyanate or a mixture of 4,4'-and 2,4'-diphenylmethane diisocyanates; (ii) prepolymers containing NCO groups, having an NCO content of from 2 to 35 weight percent, based on the weight of the prepolymer, prepared by the reaction of polyols, having a functionality of preferably from 1.75 to 4 and a molecular weight of from 800 to 15,000 with 4,4'-diphenylmethane diisocyanate or with a mixture of 4,4'- and 2,4'-diphenylmethane diisocyanates and mixtures of (i) and (ii); and (iii) 2,4- and 2,6-toluene-diisocyanate and the corresponding isomeric mixtures. PMDI in any of its forms can also be used and is preferred. In this case it preferably has an equivalent weight between 125 and 300, more preferably from 130 to 175, and an average functionality of greater than 1.5. More preferred is an average functionality of from 1.75 to 3.5. The viscosity of the polyisocyanate component is preferably from 25 to 5,000 centipoise (cps) (0.025 to 5 Pa•s), but values from 100 to 1,000 cps at 25°C (0.1 to 1 Pa•s) are preferred for ease of processing. Similar viscosities are preferred where alternative polyisocyanate components are selected. Still, preferably, the polyisocyanate component of the formulations of the present invention is selected from the group consisting of MDI, PMDI, an MDI prepolymer, a PMDI prepolymer, a modified MDI and mixtures thereof.

Polyfunctional active hydrogen containing materials useful with the present invention can include materials other than those already described hereinabove. Active hydrogen terminated prepolymers useful with the present invention include active hydrogen adjuncts of the polyisocyanates and polyisocyanate terminated prepolymers described hereinabove. Active hydrogen containing compounds most commonly used in polyurethane production are those compounds having at least two hydroxyl groups. Those compounds are referred to herein as polyols. Representatives of suitable polyols are generally known and are described in such publications as High Polymers, Vol. XVI, "Polyurethanes, Chemistry and Technology" by Saunders and Frisch, Interscience Publishers, New York, Vol. I, pp. 32-42, 44-54 (1962) and Vol. II, pp. 5-6, 198-199 (1964); Organic Polymer Chemistry by K. J. Saunders, Chapman and Hall, London, pp. 323-325 (1973); and Developments in Polyurethanes, Vol. I, J. M. Burst, ed., Applied Science Publishers, pp. 1-76 (1978). However, any active hydrogen containing compound can be used with the present invention. Examples of such materials include those selected from the following classes of compositions, alone or in admixture: (a) alkylene oxide adducts of polyhydroxyalkanes; (b) alkylene oxide adducts of non-reducing sugars and sugar derivatives; (c) alkylene oxide adducts of phosphorus and polyphosphorus acids; and (d) alkylene oxide adducts of polyphenols. Polyols of these types are referred to herein as "base polyols". Examples of alkylene oxide adducts of polyhydroxyalkanes useful herein are adducts of ethylene glycol, propylene glycol, 1,3-dihydroxypropane, 1,4-dihydroxybutane, and 1,6-dihydroxyhexane, glycerol, 1,2,4-trihydroxybutane, 1,2,6-trihydroxyhexane, 1,1,1-trimethylolethane, 1,1,1-trimethylolpropane, pentaerythritol, polycaprolactone, xylitol, arabitol, sorbitol, mannitol. Preferred herein as alkylene oxide adducts of polyhydroxyalkanes are the ethylene oxide adducts of trihydroxyalkanes. Other useful adducts include ethylene diamine, glycerin, piperazine, water, ammonia, 1,2,3,4-tetrahydroxy butane, fructose, sucrose.

Also preferred are poly(oxypropylene) glycols, triols, tetrols and hexols and any of these that are capped with ethylene oxide. These polyols also include poly(oxypropyleneoxyethylene)polyols. The oxyethylene content should preferably comprise less than 80 weight percent of the total polyol weight and more preferably less than 40 weight percent. The ethylene oxide, when used, can be incorporated in any way along the polymer chain, for example, as internal blocks, terminal blocks, or randomly distributed blocks, or any combination thereof.

Another preferred class of polyols are "copolymer polyols", which are base polyols containing stablely dispersed polymers such as acrylonitrile-styrene copolymers. Production of these copolymer polyols can be from reaction mixtures comprising a variety of other materials, including, for example, catalysts such as azobisisobutyronitrile; copolymer polyol stabilizers; and chain transfer agents such as isopropanol.

Polyester polyols can be used to prepare the polyurethane latexes of the present invention. Polyester polyols are generally characterized by repeating ester units which can be aromatic or aliphatic and by the presence of terminal primary or secondary hydroxyl groups, but any polyester terminating in at least 2 active hydrogen groups can be used with the present invention. For example, the reaction product of the tranesterification of glycols with poly(ethylene terephthalate) can be used to prepare the latexes of the present invention.

Polyamines, amine-terminated polyols, polymercaptans and other isocyanate-reactive compounds are also suitable in the present invention. Polyisocyanate polyaddition active hydrogen containing compounds (PIPA) are particularly preferred for use with the present invention. PIPA compounds are typically the reaction products of TDI and triethanolamine. A process for preparing PIPA compounds can be found in, for example, United States Patent 4,374,209, issued to Rowlands.

In addition to polyisocyanates and active hydrogen containing compounds, the polyurethane formulation useful for preparing the polyurethane latexes of the present invention can include additional materials called additives. For example, formulations useful with the present invention can include fillers, thixotropic agents, surfactants, catalysts, dispersion aids, crosslinkers. Any additive known to be useful to one of ordinary skill in the art of preparing polyurethane latexes can be used with the present invention.

Surfactants can be desirable in the present invention. Surfactants useful herein can be cationic surfactants, anionic surfactants, or a non-ionic surfactants. Examples of anionic surfactants include sulfonates, carboxylates, and phosphates. Examples of cationic surfactants include quaternary amines. Examples of non-ionic surfactants include block copolymers containing ethylene oxide and silicone surfactants. Surfactants useful in the practice of the present invention can be either external surfactants or internal surfactants. External surfactants are surfactants which do not become chemically reacted into the polymer during latex preparation. Internal surfactants are surfactants which do become chemically reacted into the polymer during latex preparation. A surfactant can be included in a formulation of the present invention in an amount ranging from 0.01 to 20 parts per 100 parts by weight of polyurethane component.

Besides selecting polyurethane formulations only for their ability to form latexes and be PSA, such formulations could be selected to include other properties as well. For example, a polyurethane formulation could be selected which has a high level of moisture impermeability. A layer of such a PSA could then provide moisture protection as well as functioning as a PSA.

The following examples are provided to illustrate the present invention. The examples are not intended to limit the scope of the present invention and should not be so interpreted. Amounts are in weight parts or weight percentages unless otherwise indicated.

### EXAMPLE 1

A polyurethane prepolymer was prepared by mixing 62.3 parts of a 2000 molecular weight polyoxypropylene diol having 12.5 percent ethylene oxide end capping; 18.8 parts of an 1800 molecular weight hetero ethylene oxide/propylene oxide monol; and 18.9 parts of PAPI* 94 (*PAPI 94 was a trade designation of The Dow Chemical Company and was a polymeric MDI).
75 parts of the polyurethane prepolymer was placed into a blender and stirred at the high setting with 60 parts of water for 1 minute. An additional 80 parts of water were added with 1 minute of additional stirring to prepare a polyurethane latex with 35 percent solids.
The latex was next applied to one side of a piece of cardboard using a pipette and spread evenly over the cardboard. The latex was dried at ambient conditions. After drying, the resultant PSA was tacky to the touch and adheres and then releases a sheet of paper.

### EXAMPLE 2

A piece of PSA coated substrate from Example 1 was tested for adhesiveness according to ASTM D-3121. In this test, a metal sphere was allowed to roll down an incline and then across a 6 inch long test specimen. In a first test, a substrate prepared by the method of Example 1 was tested and the sphere stops after 12.07 cm (4.75 inches) of travel across the substrate. The substrate was then coated with sawdust and the experiment repeated and the sphere rolls past all 6 inches of substrate without stopping. The substrate was then rinsed under tap water to remove the sawdust, wiped with a paper towel, and allowed to dry. The experiment was repeated and again the sphere stops after rolling 12.07 cm (4.75 inches).

### EXAMPLE 3

A polyurethane prepolymer was prepared by mixing 53.56 parts of a 2000 molecular weight polyoxypropylene diol having 12.5 percent ethylene oxide end capping; 30 parts of an 3100 molecular weight 50 percent ethylene oxide, 50 percent propylene oxide hetero monol; and 16.44 parts of PAPI 94. 50 parts of the polyurethane prepolymer was placed into a beaker and stirred at high shear. Over a 5 minute period, 100 parts of water were added. The resulting polyurethane latex had 33 percent solids.

### EXAMPLE 4

A polyurethane prepolymer was prepared by mixing 63 parts of a 2000 molecular weight polyoxypropylene diol having 12.5 percent ethylene oxide end capping; 10 parts of an 1800 molecular weight 50 percent ethylene oxide, 50 percent propylene oxide hetero monol; 10 parts of a 1000 molecular weight butylene oxide monol; and 17 parts of PAPI 94. 50 parts of the polyurethane prepolymer was placed into a beaker and stirred at high shear. 10 parts of water were added to the prepolymer. After the 10 parts of water 1.13 parts of surfactant solution (POLYSTEP A-15, 22 percent active) was added. Over a 5 minute period, the remaining 90 parts of water were added. The resulting polyurethane latex had 33 percent solids.

### EXAMPLE 5

A polyurethane prepolymer was prepared by mixing 66.5 parts of a 2000 molecular weight polyoxypropylene diol having 12.5 percent ethylene oxide end capping; 10 parts of an 1800 molecular weight 50 percent ethylene oxide, 50 percent propylene oxide hetero monol; 6.5 parts of a 650 molecular weight propylene oxide monol; and 17 parts of PAPI 94. 50 parts of the polyurethane prepolymer was placed into a beaker and stirred at high shear. 10 parts of water were added to the prepolymer. After the 10 parts of water 1.13 parts of surfactant solution (POLYSTEP A-15, 22 percent active) was added. Over a 5 minute period, the remaining 90 parts of water were added. The resulting polyurethane latex had 33 percent solids.

### EXAMPLE 6

A polyurethane prepolymer was prepared by mixing 55.6 parts of a 2000 molecular weight polyoxypropylene diol having 12.5 percent ethylene oxide end capping; 6.4 parts of a 3000 molecular weight 10 percent ethylene oxide, 90 percent propylene oxide hetero triol; 15 parts of an 1800 molecular weight 50 percent ethylene oxide, 50 percent propylene oxide hetero monol; and 23 parts of ISONATE* 181, a 182 equivalent weight prepolymer based on 4,4'-diphenylmethane diisocyanate (*Trademark of The Dow Chemical Company).
50 parts of the polyurethane prepolymer was placed into a beaker and stirred at high shear. 10 parts of water were added to the prepolymer. After the 10 parts of water 1.13 parts of surfactant solution (POLYSTEP A-15, 22 percent active, Stepan Company) was added. Over a 5 minute period, the remaining 86 parts of water were added. Following the water, 4.8 parts of a 10 percent piperazine solution in water was added. The resulting polyurethane latex had 33 percent solids.

### EXAMPLE 7

A polyurethane prepolymer was prepared by mixing 68.6 parts of a 2000 molecular weight polyoxypropylene diol having 12.5 percent ethylene oxide end capping; 15 parts of an 1800 molecular weight 50 percent ethylene oxide, 50 percent propylene oxide hetero monol; and 1604 parts of ISONATE 50 OP, a mixture of 50 percent 2,4'-diphenylmethane diisocyanate and 50 percent 4,4'-diphenylmethane diisocyanate. 50 parts of the polyurethane prepolymer was placed into a beaker and stirred at high shear. 10 parts of water were added to the prepolymer. After the 10 parts of water 1.13 parts of surfactant solution (POLYSTEP A-15, 22 percent, Stepan Company) was added. Over a 5 minute period, the remaining 90 parts of water were added. The resulting polyurethane latex was a linear polymer, and was dispersed at 33 percent solids.

### EXAMPLE 8

Steel panels were coated with the latexes prepared in Examples 3 - 6 to prepare PSA films. The latexes were sprayed on and then dried at 71.2°C (160 °F) for 15 minutes. Tackiness was measured by a loop tack method, were a 76.2 µm (3 mil) mylar film was looped in the grips of an Instron™ testing machine. The loop was brought into contact with the PSA on the steel panel, and then immediately removed at 300 mm/min. The loop tack value was reported as the peak load to debond. After measuring the initial tack, each panel was washed in tap water with a sponge. The values after washing show a minimal loss of tack from washing. The results were reported in TABLE 1.

**TABLE 1**

| Example # | Loop tack (N) | Loop tack after washing (N) | percent Loss |
|---|---|---|---|
| 3 | 4.23 | 3.87 | 9 |
| 4 | 5.50 | 5.00 | 9 |
| 5 | 4.30 | 4.07 | 5 |
| 6 | 1.50 | 1.31 | 12 |

### EXAMPLE 9

Mylar films were coated with the latexes prepared in Examples 3 - 6 to prepare PSA films. The latexes were sprayed on and then dried at 71.1°C (160°F) for 15 minutes. Peel strength can be determined by using PSTC-2 (Pressure Sensitive Tape Council). This was a 90° peel at 300 mm/min. The peel strength was reported as the average value over a 15 cm peel length of the tape. Peel strength build was measured by comparing the peel strength 30 minutes after making the bond to the peel strength after some period of aging at elevated temperature (7 days at 48.9°C (120°F). The values after aging show some with minimal peel strength build. The results were presented in TABLE 2.

**TABLE 2**

| Example # | Peel Strength, 30 minutes (N/cm) | Peel Strength, 7 days at 48.9°C (120° F) (N/cm) | Percent Build |
|---|---|---|---|
| 3 | 0.52 | 1.40 | 167 |
| 4 | 0.70 | 0.87 | 25 |
| 5 | 0.52 | 0.52 | 0 |
| 6 | 0.52 | 3.15 | 500 |
| 7 | 0.52 | 1.04 | 100 |

## Claims

1. A polyurethane latex composition, said composition comprising a polyurethane aqueous dispersion prepared from a formulation which includes a stochiometric excess of polyols such that the polymer terminates in unreacted polyol chains which are not connected to other polymer molecules and which dispersion contains less than 20 percent pendant chains by weight based on total weight of solids, said polyurethane aqueous dispersion being free of volatile solvent and being suitable for being dried to from a pressure sensitive-adhesive composition.

2. A polyurethane latex composition of claim 1, wherein said polyurethane aqueous dispersion is suitable for being dried to form a pressure-sensitive-adhesive composition with an original adhesive strength, said pressure-sensitive-adhesive composition having an adhesive strength of at least 60 percent of said original adhesive strength when said pressure-sensitive-adhesive composition is washed and dried.

3. A polyurethane latex composition of claim 1 or 2, wherein said polyurethane aqueous dispersion is free of an added tackifier.

4. A substrate having a pressure-sensitive-adhesive coating affixed to at least a portion of said substrate, said pressure-sensitive-adhesive coating comprising a pressure-sensitive-adhesive composition that contains less than 20 percent by weight pendant claims based on total weight of solids, said pressure-sensitive-adhesive composition being obtainable by drying a polyurethane aqueous dispersion according to claims 1, 2 or 3.

5. A substrate of claim 4, wherein said pressure-sensitive-adhesive composition has an original adhesive strength and said pressure-sensitive-adhesive composition has an adhesive strength of at least 60 percent of said original adhesive strength when said pressure-sensitive-adhesive composition is washed and dried.

6. A substrate of claim 4 or 5, wherein said pressure-sensitive-adhesive composition is obtainable by drying a polyurethane aqueous dispersion that is further free of an added tackifier.

7. A substrate of anyone of claims 4 to 6, wherein said substrate is a white board or a walk-off carpet mat.

8. A substrate of anyone of claims 4 to 7, wherein said pressure-sensitive-adhesive coating has a peel strength build of less than 400%.

9. A substrate of claim 8, wherein said pressure-sensitive-adhesive coating has a peel strength build of less than 300%.

10. A substrate of claim 8, wherein said pressure-sensitive-adhesive coating has a peel strength build of less than 200%.

11. A substrate of claim 8, wherein said pressure-sensitive-adhesive coating has a peel strength build of less than 100%.

12. A pressure-sensitive-adhesive composition, said composition comprising less than 20 percent by weight pendant chains based on total weight of solids, said pressure-sensitive-adhesive composition being obtainable by drying a polyurethane aqueous dispersion according to claims 1,2 or 3.

13. A pressure-sensitive-adhesive composition of claim 12, wherein said composition comprises from 0 percent to 19.5 percent pendant chains by weight based on total weight of solids.

14. A pressure-sensitive-adhesive composition of claim 12 or 13, wherein said composition comprises from 0 percent to 17 percent pendant chains by weight based on total weight of solids.

15. A pressure-sensitive-adhesive composition of claim 12, 13 or 14, wherein said composition comprises from 0 percent to 15 percent pendant chains by weight based on total weight of solids.

16. A pressure-sensitive-adhesive composition of anyone of claims 12 to 15, wherein said composition has a Tg below the temperature at which said composition is used.

17. A pressure-sensitive-adhesive composition of claim 16, wherein said composition has a Tg below 5°C.

18. A pressure-sensitive-adhesive composition of anyone of claims 12 to 17, wherein said composition is substantially linear.

19. A pressure-sensitive-adhesive composition of anyone of claims 12 to 18,
wherein said composition has an original adhesive strength, said composition having an adhesive strength of at least 60 percent of said original adhesive strength when said composition is washed and dried.

20. A pressure-sensitive-adhesive composition of anyone of claims 12 to 19, wherein said composition is obtainable by drying a polyurethane aqueous dispersion that is substantially fully reacted in the latex state and is further free of an added tackifier.

21. A process for preparing a substrate having a pressure-sensitive-adhesive coating affixed to at least a portion of said substrate, said process comprising:
A. applying a polyurethane aqueous dispersion according to claim 1, 2 or 3 to at least a portion of a substrate, and said polyurethane aqueous dispersion being obtainable by:
1) emulsifying a polyurethane prepolymer in water, said polyurethane prepolymer having at least one unreacted functional group; and
2) chemically reacting substantially any unreacted functional group; and
B. dehydrating said polyurethane aqueous dispersion and obtaining a pressure sensitive-adhesive composition.

## Patentansprüche

1. Eine Polyurethanlatexzusammensetzung, wobei die Zusammensetzung eine wässrige Polyurethandispersion beinhaltet, zubereitet aus einer Formulierung, welche einen stöchiometrischen Überschuss von Polyolen enthält, sodass das Polymer in nicht reagierten Polyolketten terminiert, die nicht mit anderen Polymermolekülen verbunden sind, und wobei die Dispersion, bezogen auf das Gesamtfeststoffgewicht, weniger als 20 Gewichtsprozent anhängender Ketten enthält, wobei die wässrige Polyurethandispersion frei von flüchtigen Lösungsmitteln ist und geeignet ist, um getrocknet zu werden, um eine druckempfindliche Klebstoffzusammensetzung zu bilden.

2. Polyurethanlatexzusammensetzung gemäß Anspruch 1, wobei die wässrige Polyurethandispersion geeignet ist, um getrocknet zu werden, um eine druckempfindliche Klebstoffzusammensetzung mit einer Originalhaftfestigkeit zu bilden, wobei die druckempfindliche Klebstoffzusammensetzung eine Haftfestigkeit von mindestens 60 Prozent der Originalhaftfestigkeit aufweist, wenn die druckempfindliche Klebstoffzusammensetzung gewaschen und getrocknet wird.

3. Polyurethanlatexzusammensetzung gemäß Anspruch 1 oder 2, wobei die wässrige Polyurethandispersion frei von zugefügtem Klebrigmacher ist.

4. Ein Substrat mit einer an mindestens einem Abschnitt des Substrats angebrachten druckempfindlichen Klebstoffbeschichtung, wobei die druckempfindliche Klebstoffbeschichtung eine druckempfindliche Klebstoffzusammensetzung umfasst, die, bezogen auf das Gesamtfeststoffgewicht, weniger als 20 Gewichtsprozent anhängender Ketten enthält, wobei die druckempfindliche Klebstoffzusammensetzung durch Trocknen einer wässrigen Polyurethandispersion gemäß den Ansprüchen 1, 2 oder 3 erhältlich ist.

5. Substrat gemäß Anspruch 4, wobei die druckempfindliche Klebstoffzusammensetzung eine Originalhaftfestigkeit aufweist und die druckempfindliche Klebstoffzusammensetzung eine Haftfestigkeit von mindestens 60 Prozent der Originalhaftfestigkeit aufweist, wenn die druckempfindliche Klebstoffzusammensetzung gewaschen und getrocknet wird.

6. Substrat gemäß Anspruch 4 oder 5, wobei die druckempfindliche Klebstoffzusammensetzung durch Trocknen einer wässrigen Polyurethandispersion erhältlich ist, die ferner frei von einem zugefügten Klebrigmacher ist.

7. Substrat gemäß einem der Ansprüche 4 bis 6, wobei das Substrat eine Weißwandtafel oder eine Teppichschutzmatte ist.

8. Substrat gemäß einem der Ansprüche 4 bis 7, wobei die druckempfindliche Klebstoffbeschichtung eine Zunahme der Abziehfestigkeit von weniger als 400 % aufweist.

9. Substrat gemäß Anspruch 8, wobei die druckempfindliche Klebstoffbeschichtung eine Zunahme der Abziehfestigkeit von weniger als 300 % aufweist.

10. Substrat gemäß Anspruch 8, wobei die druckempfindliche Klebstoffbeschichtung eine Zunahme der Abziehfestigkeit von weniger als 200 % aufweist.

11. Substrat gemäß Anspruch 8, wobei die druckempfindliche Klebstoffbeschichtung eine Zunahme der Abziehfestigkeit von weniger als 100 % aufweist.

12. Druckempfindliche Klebstoffzusammensetzung, wobei die Zusammensetzung, bezogen auf das Gesamtfeststoffgewicht, weniger als 20 Gewichtsprozent anhängender Ketten beinhaltet, wobei die druckempfindliche Klebstoffzusammensetzung durch Trocknen einer wässrigen Polyurethandispersion gemäß den Ansprüchen 1, 2 oder 3 erhältlich ist.

13. Druckempfindliche Klebstoffzusammensetzung gemäß Anspruch 12, wobei die Zusammensetzung, bezogen auf das Gesamtfeststoffgewicht, von 0 Gewichtsprozent bis 19,5 Gewichtsprozent anhängender Ketten beinhaltet.

14. Druckempfindliche Klebstoffzusammensetzung gemäß Anspruch 12 oder 13, wobei die Zusammensetzung, bezogen auf das Gesamtfeststoffgewicht, von 0 Gewichtsprozent bis 17 Gewichtsprozent anhängender Ketten beinhaltet.

15. Druckempfindliche Klebstoffzusammensetzung gemäß Anspruch 12, 13 oder 14, wobei die Zusammensetzung, bezogen auf das Gesamtfeststoffgewicht, von 0 Gewichtsprozent bis 15 Gewichtsprozent anhängender Ketten beinhaltet.

16. Druckempfindliche Klebstoffzusammensetzung gemäß einem der Ansprüche 12 bis 15, wobei die Zusammensetzung eine Tg unterhalb der Temperatur aufweist, bei welcher die Zusammensetzung verwendet wird.

17. Druckempfindliche Klebstoffzusammensetzung gemäß Anspruch 16, wobei die Zusammensetzung eine Tg unterhalb von 5 °C aufweist.

18. Druckempfindliche Klebstoffzusammensetzung gemäß einem der Ansprüche 12 bis 17, wobei die Zusammensetzung im Wesentlichen linear ist.

19. Druckempfindliche Klebstoffzusammensetzung gemäß einem der Ansprüche 12 bis 18, wobei die Zusammensetzung eine Originalhaftfestigkeit aufweist, wobei die Zusammensetzung eine Haftfestigkeit von mindestens 60 Prozent der Originalhaftfestigkeit aufweist, wenn die Zusammensetzung gewaschen und getrocknet wird.

20. Druckempfindliche Klebstoffzusammensetzung gemäß einem der Ansprüche 12 bis 19, wobei die Zusammensetzung durch Trocknen einer wässrigen Polyurethandispersion erhältlich ist, die im Wesentlichen vollständig in dem Latexzustand reagiert ist und ferner frei von einem zugefügten Klebrigmacher ist.

21. Ein Verfahren zum Herstellen eines Substrats mit einer an mindestens einem Abschnitt des Substrats angebrachten druckempfindlichen Klebstoffbeschichtung, wobei das Verfahren Folgendes beinhaltet:
A. Auftragen einer wässrigen Polyurethandispersion gemäß Anspruch 1, 2 oder 3 auf mindestens einen Abschnitt des Substrats, und wobei die wässrige Polyurethandispersion durch Folgendes erhältlich ist:
1) Emulgieren eines Polyurethanpräpolymers in Wasser, wobei das Polyurethanpräpolymer mindestens eine nicht reagierte funktionelle Gruppe aufweist; und
2) Zur-chemischen-Reaktion-Bringen im Wesentlichen jeder nicht reagierten funktionellen Gruppe; und
B. Entwässern der wässrigen Polyurethandispersion und Erhalten einer druckempfindlichen Klebstoffzusammensetzung.

## Revendications

1. Une composition de latex de polyuréthane, ladite composition comprenant une dispersion aqueuse de polyuréthane préparée à partir d'une formulation qui inclut un excès stoechiométrique de polyols tel que le polymère se termine par des chaînes polyol n'ayant pas réagi qui ne sont pas reliées à d'autres molécules de polymère et laquelle dispersion contient moins de 20 pour cent de chaînes pendantes en poids rapporté au poids total de matières solides, ladite dispersion aqueuse de polyuréthane étant exempte de solvant volatil et étant appropriée pour être séchée afin de former une composition adhésive sensible à la pression.

2. Une composition de latex de polyuréthane de la revendication 1, dans laquelle ladite dispersion aqueuse de polyuréthane est appropriée pour être séchée afin de former une composition adhésive sensible à la pression avec une force adhésive originale, ladite composition adhésive sensible à la pression ayant une force adhésive d'au moins 60 pour cent de ladite force adhésive originale lorsque ladite composition adhésive sensible à la pression est lavée et séchée.

3. Une composition de latex de polyuréthane de la revendication 1 ou de la revendication 2, dans laquelle ladite dispersion aqueuse de polyuréthane est exempte d'un agent poisseux ajouté.

4. Un substrat ayant un revêtement adhésif sensible à la pression collé sur au moins une portion dudit substrat, ledit revêtement adhésif sensible à la pression comprenant une composition adhésive sensible à la pression qui contient moins de 20 pour cent en poids de chaînes pendantes rapporté au poids total de matières solides, ladite composition adhésive sensible à la pression pouvant être obtenue par séchage d'une dispersion aqueuse de polyuréthane selon les revendications 1, 2 ou 3.

5. Un substrat de la revendication 4, dans lequel ladite composition adhésive sensible à la pression a une force adhésive originale et ladite composition adhésive sensible à la pression a une force adhésive d'au moins 60 pour cent de ladite force adhésive originale lorsque ladite composition adhésive sensible à la pression est lavée et séchée.

6. Un substrat de la revendication 4 ou de la revendication 5, dans lequel ladite composition adhésive sensible à la pression peut être obtenue par séchage d'une dispersion aqueuse de polyuréthane qui est en outre exempte d'un agent poisseux ajouté.

7. Un substrat de n'importe laquelle des revendications 4 à 6, ledit substrat étant un tableau blanc ou un tapis essuie-pieds.

8. Un substrat de n'importe laquelle des revendications 4 à 7, dans lequel ledit revêtement adhésif sensible à la pression a un développement de résistance au pelage de moins de 400 %.

9. Un substrat de la revendication 8, dans lequel ledit revêtement adhésif sensible à la pression a un développement de résistance au pelage de moins de 300 %.

10. Un substrat de la revendication 8, dans lequel ledit revêtement adhésif sensible à la pression a un développement de résistance au pelage de moins de 200 %.

11. Un substrat de la revendication 8, dans lequel ledit revêtement adhésif sensible à la pression a un développement de résistance au pelage de moins de 100 %.

12. Une composition adhésive sensible à la pression, ladite composition comprenant moins de 20 pour cent en poids de chaînes pendantes rapporté au poids total de matières solides, ladite composition adhésive sensible à la pression pouvant être obtenue par séchage d'une dispersion aqueuse de polyuréthane selon les revendications 1, 2 ou 3.

13. Une composition adhésive sensible à la pression de la revendication 12, dans laquelle ladite composition comprend de 0 pour cent à 19,5 pour cent de chaînes pendantes en poids rapporté au poids total de matières solides.

14. Une composition adhésive sensible à la pression de la revendication 12 ou de la revendication 13, dans laquelle ladite composition comprend de 0 pour cent à 17 pour cent de chaînes pendantes en poids rapporté au poids total de matières solides.

15. Une composition adhésive sensible à la pression de la revendication 12, de la revendication 13 ou de la revendication 14, dans laquelle ladite composition comprend de 0 pour cent à 15 pour cent de chaînes pendantes en poids rapporté au poids total de matières solides.

16. Une composition adhésive sensible à la pression de n'importe laquelle des revendications 12 à 15, dans laquelle ladite composition a une Tg au-dessous de la température à laquelle ladite composition est utilisée.

17. Une composition adhésive sensible à la pression de la revendication 16, dans laquelle ladite composition a une Tg au-dessous de 5 °C.

18. Une composition adhésive sensible à la pression de n'importe laquelle des revendications 12 à 17, dans laquelle ladite composition est substantiellement linéaire.

19. Une composition adhésive sensible à la pression de n'importe laquelle des revendications 12 à 18, dans laquelle ladite composition a une force adhésive originale, ladite composition ayant une force adhésive d'au moins 60 pour cent de ladite force adhésive originale lorsque ladite composition est lavée et séchée.

20. Une composition adhésive sensible à la pression de n'importe laquelle des revendications 12 à 19, dans laquelle ladite composition peut être obtenue par séchage d'une dispersion aqueuse de polyuréthane qui a substantiellement complètement réagi à l'état de latex et est en outre exempte d'un agent poisseux ajouté.

21. Un procédé pour préparer un substrat ayant un revêtement adhésif sensible à la pression collé sur au moins une portion dudit substrat, ledit procédé comprenant :
A. l'application d'une dispersion aqueuse de polyuréthane selon la revendication 1, la revendication 2 ou la revendication 3 sur au moins une portion d'un substrat, et ladite dispersion aqueuse de polyuréthane pouvant être obtenue par :
1) l'émulsification d'un prépolymère de polyuréthane dans de l'eau, ledit prépolymère de polyuréthane ayant au moins un groupe fonctionnel n'ayant pas réagi ; et
2) la mise en réaction chimique de substantiellement tout groupe fonctionnel n'ayant pas réagi ; et
B. la déshydratation de ladite dispersion aqueuse de polyuréthane et l'obtention d'une composition adhésive sensible à la pression.
